(19) Europäisches Patentamt
European Patent Office
Office européen des brevets

(11) Veröffentlichungsnummer: **0 197 319**
**B1**

(12) # EUROPÄISCHE PATENTSCHRIFT

(45) Veröffentlichungstag der Patentschrift: **18.10.89**

(51) Int. Cl.⁴: **C 08 F 10/00, C 08 F 4/64**

(21) Anmeldenummer: **86103086.4**

(22) Anmeldetag: **07.03.86**

(54) **Verfahren zur Herstellung von optisch aktiven Polyolefinen.**

(30) Priorität: **13.03.85 DE 3508887**

(43) Veröffentlichungstag der Anmeldung:
**15.10.86 Patentblatt 86/42**

(45) Bekanntmachung des Hinweises auf die Patenterteilung:
**18.10.89 Patentblatt 89/42**

(84) Benannte Vertragsstaaten:
**BE DE FR GB IT NL**

(56) Entgegenhaltungen:
**EP-A- 0 129 368**

(73) Patentinhaber: **HOECHST AKTIENGESELLSCHAFT, Postfach 80 03 20, D-6230 Frankfurt am Main 80 (DE)**

(72) Erfinder: **Kaminsky, Walter, Prof. Dr., Buschweg 52, D-2080 Pinneberg (DE)**
Erfinder: **Niedoba, Stefan, Innocentiastrasse 15, D-2000 Hamburg 13 (DE)**

**EP 0 197 319 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Herstellung von optisch aktiven Polyolefinen durch Polymerisation von Propylen und höheren 1-Olefinen unter Verwendung neuer Ziegler-Katalysatorsysteme. Die Erfindung betrifft insbesondere ein Verfahren zur Herstellung von optisch aktivem Polypropylen, wobei die Polymerisation durchgeführt wird in Gegenwart eines Katalysatorsystems, das aus einem optisch aktiven Enantiomeren einer stereorigiden, chiralen Übergangsmetallverbindung und einer Sauerstoff enthaltenden Aluminiumalkylverbindung besteht.

Isotaktisches Polypropylen wird bekanntlich mit der Hilfe von sogenannten Trägerkatalysatorsystemen hergestellt. Es handelt sich hierbei um Mischkatalysatoren, bei denen beispielsweise auf Magnesiumhalogenid eine Titanverbindung und zur Steigerung der Isotaktizität ein Elektronendonator aufgebracht werden und bei denen Aluminiumalkyle als Aktivatoren eingesetzt werden. Derartige Katalysatoren sind beispielsweise in der DE-OS 2230672 und in der EP-PS 7061 beschrieben. Diese aktiven Katalysatorsysteme sind durch eine hohe Isotaktizität charakterisiert. Die aktiven Zentren des trägerfixierten Katalysators sind dabei durch die fest fixierten Liganden chiral angeordnet.

In den bekannten isotaktischen Polypropylenen liegen gleiche Anteile aus beiden Enantiomeren (Racemate) vor.

Bekannt sind auch lösliche Ziegler-Katalysatoren. So sind beispielsweise in der DE-OS 3007725 und der DE-OS 3127133 Verfahren zur Herstellung von Polyolefinen beschrieben, die unter Verwendung von Bis(Cyclopentadienyl)-Zirkonium-Alkyl- oder -Halogen-Verbindungen in Kombination mit oligomeren Aluminiumoxanen durchgeführt werden. Diese löslichen Katalysatorsysteme zeigen bei der Polymerisation von Ethylen und Propylen zwar eine sehr hohe Aktivität, im Falle der Propylen-Polymerisation erhält man jedoch überwiegend ataktische Anteile. Erst der Einsatz von Katalysatoren mit sterisch großen Resten am Übergangsmetall oder die Verwendung von stereorigiden, chiralen Zirkonverbindungen in Kombination mit Methylaluminoxan [J.A. Ewen, J. Am. Chem. Soc. 106 (1984) 6355; EP-OS Nr. 129368] liefert isotaktisches Polypropylen.

Es wurde nun gefunden, daß man bei der Polymerisation von Propylen und anderen höheren 1-Olefinen in Gegenwart eines Katalysatorsystems aus

a) einer optisch aktiven Übergangsmetallverbindung, die nur aus einem Enantiomeren (R- oder S-Form) einer stereorigiden und chiralen Übergangsmetallverbindung der 4. bis 6. Nebengruppe, vorzugsweise einer Titan- oder Zirkonverbindung besteht und der allgemeinen Formel $R^1Me(2A)R^2 R^3$ entspricht, und

b) einer Aluminium enthaltenden Verbindung des Aluminoxan-Typs der allgemeinen Formeln

$$Al_2OR^5_4(Al(R^5)\text{-}O)_n$$

für ein lineares Aluminoxan, und

$$(Al(R^5)\text{-}O)_{n+2}$$

für cyclisches Aluminoxan, mit n = 4 bis 20 und $R^5$ Methyl oder Ethyl, Polymerisate erhält, die optisch aktiv sind und einen hohen Isotaktizitätsgrad aufweisen.

Die Katalysatorsysteme sind außerdem außerordentlich aktiv. Bei der optisch aktiven, stererorigiden, chiralen Übergangsmetallverbindung des beim erfindungsgemäßen Verfahren einzusetzenden Katalysatorsystems handelt es sich um $\pi$-gebundene, unsymmetrische, ein- oder mehrkernige Verbindungen, die durch Kohlenwasserstoffketten verbrückt sind und als Übergangsmetall vorzugsweise Titan oder Zirkonium enthalten und folgender allgemeiner Strukturformel entsprechen:

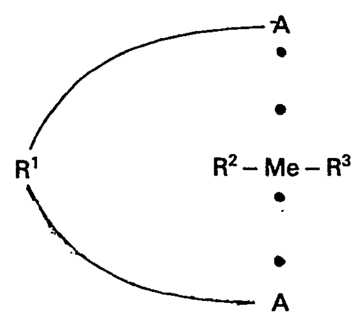

Darin bedeuten

Me ein Übergangsmetall der 4. bis 6. Nebengruppe wie Titan, Zirkonium, Vanadium, Chrom, Molybdän, Wolfram, vorzugsweise Titan oder Zirkonium, insbesondere Zirkonium;

A ein- oder mehrkerniger, unsymmetrischer Kohlenwasserstoffrest, vorzugsweise eine Indenyl- oder eine substituierte Cyclopentadienylgruppe, insbesondere 4,5,6,7-Tetrahydro-1-indenyl;

$R^1$ einen $C_1$–$C_4$-Kohlenwasserstoffrest, vorzugsweise einen $C_2H_4$-Kohlenwasserstoffrest;

$R^2$ und $R^3$ Halogen, bevorzugt Chlor, oder einen $C_1$- bis $C_6$-Alkylrest, wobei $R^2$ und $R^3$ gleich oder unterschiedlich sind.

Bevorzugt sind die R- oder S-Formen des Ethylen-bis(4,5,6,7-tetrahydro-1-indenyl)zirkoniumdichlorids oder des Ethylen-bis(4,5,6,7-tetrahydro-1-indenyl)-titandichlorids, insbesondere des Ethylen-bis(4,5,6,7-tetrahydro-1-indenyl)zirkoniumdichlorids.

Die optisch aktiven Übergangsmetallverbindungen werden jeweils als reine R- oder S-Form eingesetzt. Sie werden nach bekannten Verfahren hergestellt, die z. B. beschrieben sind in Journal of Organometallic Chemistry, 232 (1982) 233–247.

Als aluminiumorganische Katalysatorkomponente werden Aluminoxane verwendet der allgemeinen Formeln

$$Al_2OR^5_4(Al(R^5)\text{-}O)_n \text{ für lineares Aluminoxan}$$

und

$(Al(R^5)\text{-}O)_{n+2}$ für cyclisches Aluminoxan,

in denen n eine ganze Zahl von 4 bis 20 und $R^5$ ein Methyl- oder Ethylrest, vorzugsweise ein Methylrest, sind. Die Herstellung derartiger Verbindungen ist bekannt. Es ist wichtig, daß die Aluminoxane einen Polymerisationsgrad von wenigstens 6 besitzen, vorzugsweise liegt er über 10.

Als Monomere werden bei der Herstellung von Homopolymerisaten Olefine der Formel $CH_2{=}CHR$ mit R gleich $C_1$- bis $C_{10}$-Alkyl eingesetzt. Bevorzugt ist die Verwendung von Propen oder 1-Buten.

Die Polymerisation kann durchgeführt werden in Lösungsmitteln, in den flüssigen Monomeren oder in der Gasphase. Es ist vorteilhaft, wenn bei der Polymerisation in Lösungsmitteln Aluminoxankonzentrationen von $10^{-4}$ bis $10^{-1}$ mol pro Liter sowie die Aluminium- und Übergangsmetall-Komponente in molarem Verhältnis von 10:1 bis $10^8$:1 angewendet werden.

Die Polymerisation wird durchgeführt bei Temperaturen im Bereich von −80 bis 100 °C, vorzugsweise aber bei −40 bis 80 °C, insbesondere bevorzugt ist der Bereich zwischen −20 und 60 °C.

Die mittlere Molmasse der gebildeten Polymeren läßt sich durch Wasserstoffzugabe und/oder Variation der Temperatur in an sich bekannter Weise steuern. Bei tiefen Temperaturen werden höhere, bei höheren Temperaturen niedrigere Molmassen eingestellt.

Die durch das erfindungsgemäße Verfahren erhaltenen Polyolefine, insbesondere Polypropylene und Polybutadiene, zeichnen sich aus durch optische Aktivität. Es zeigt sich ein optischer Drehwert des Polyolefins, wenn man das Polymere in Dekahydronaphthalin mittels eines Ultraschallbades löst und in einem handelsüblichen Polarimeter (Perkin Elmer 241) untersucht. In Abhängigkeit von der Menge an Polymeren und der Alterungszeit ergeben sich Drehwerte von $[\alpha]^T$ zwischen 50–200°, wobei $[\alpha]^T$ definiert ist als α gemessen $\times 100/m_{PV}$.

Es bedeuten α gemessen = gemessener Drehwinkel, $m_{P \cdot V}$ = Gramm Polymeres pro 100 $cm^3$ Dekahydronaphthalin.

Bisher sind keine entsprechenden optisch aktiven Polypropylene oder Polybutylene beschrieben worden. Es ist außerordentlich überraschend, daß derartige Polymere überhaupt hergestellt werden konnten. Die erfindungsgemäßen Polyolefine lassen sich wie bekannte Polyolefine thermoplastisch verarbeiten, z. B. zu Formkörpern wie Fasern und Folien.

Das erfindungsgemäße optisch aktive Polypropylen zeichnet sich durch einen um 7 bis 10 °C höheren Schmelzpunkt aus gegenüber einem optisch inaktiven Produkt, welches unter gleichen Bedingungen mittels des Racemats der chiralen Übergangsmetallverbindung hergestellt wurde.

Die durch das erfindungsgemäße Verfahren erhaltenen Polyolefine zeichnen sich ferner durch einen sehr hohen Grad an Isotaktizität aus, wobei der in Heptan lösliche Anteil unter 1% liegt. 99 Gew.-% und mehr des nach dem erfindungsgemäßen Verfahren erhaltenen Polypropylens sind isotaktisches Polypropylen.

Beispiel 1

a) Herstellung von Methylaluminoxan

44,3 g $Al_2(SO_4)_3 \times 16\ H_2O$ (0,056 mol, entsprechend 1 mol $H_2O$) wurden in 250 ml Toluol suspendiert, mit 50 ml Trimethylaluminium (0,52 mol) versetzt und bei 20 °C zur Reaktion gebracht. Nach 30 h Reaktionszeit waren ca. 0,9 mol Methan entwickelt worden. Anschließend wurde die Lösung von festem Aluminiumsulfat abfiltriert. Durch Abziehen des Toluols wurden 19,7 g Methylaluminoxan erhalten. Die Ausbeute betrug 63% der Theorie. Das kryoskopisch in Benzol bestimmte mittlere Molekulargewicht lag bei 1170.

Der mittlere Oligemerisationsgrad betrug ca. 16.

b) Herstellung von optisch aktivem R-(270° positiv drehend) Ethylen-bis-(4,5,6,7-tetrahydroindenyl)zirkoniumdichlorid

Die Herstellung erfolgt analog wie im Journal of Organometallic Chemistry, 232 (1982) 233–247 auf den Seiten 245–247 für Ethylen-bis-(4,5,6,7-tetrahydroindenyl)titandichlorid beschrieben.

c) Polymerisation

Ein ausgeheizter, mehrfach mit Argon gespülter 1-Liter-Glasautoklav wurde unter Thermostatisierung auf −10 °C mit 330 ml absolutem Toluol, 360 mg Methylalumoxan mit einem mittleren Oligomerisationsgrad von 16 sowie $1{,}2 \times 10^{-6}$ mol R-Ethylen-bis-(4,5,6,7-tetrahydroindenyl)zirkoniumdichlorid gefüllt. In diese Lösung wurden schnell 70 ml Propen einkondensiert, wobei sich der Ansatz nach wenigen Minuten trübte. Nach 2 h Polymerisationszeit wurde die Temperatur auf 18 °C erhöht und die Polymerisation weitere 13 h fortgesetzt. Der Druck betrug ca. 2,5 bar. Die Polymerisation wurde dann durch Abblasen des überschüssigen Monomeren unter Zugabe von Ethanol beendet. Katalysatorreste wurden durch Rühren mit HCl-Lösung entfernt und das Polymere anschließend abgesaugt und bis zur Gewichtskonstanz bei 40 °C getrocknet. Die Ausbeute an optisch aktivem, pulvrigen, isotaktischen Polypropylen betrug 33,5 g, die Aktivität lag somit bei 1860 kgPP/mol Zrxh bei einem $M_n$ von 45000.

Zur Bestimmung des Drehwertes wurden 20 mg des Polymeren in 2 ml Dekalin suspendiert und anschließend mittels eines Ultraschallbades weitgehend gelöst. Nach Überführung der Lösung in eine 10 cm Küvette ergab sich in einem automatisch abgleichenden Polarimeter mit der Na-D-Linie ein Drehwert von −90°.

Beispiel 2

Es wurde wie in Beispiel 1 gearbeitet, jedoch bei einer Temperatur von 10 °C polymerisiert. Nach 16 h Polymerisationszeit wurden 24,5 g optisch aktives Polypropylen erhalten. Die Aktivität betrug 1280 kg PP/mol Zrxh. Der Drehwert betrug zu −150°.

Beispiel 3

Es wurde wie in Beispiel 1 gearbeitet, jedoch wurden nur 270 mg Methylaluminoxan in 250 ml Toluol vorgelegt. Dazu wurden $2 \times 10^{-6}$ mol der R-Zirkonverbindung und 48 g 1-Buten zudosiert. Bei einer Temperatur von 15 °C wurde 15 h lang polymerisiert.

Die Ausbeute betrug 0,2 g an optisch aktivem, kristallinem Polybuten. Daraus errechnet sich eine Aktivität von 6,8 kg PB/mol Zrxh. Der optische Drehwert des Polybutadiens wurde zu +100° bestimmt.

**Patentansprüche**

1. Verfahren zur Herstellung von optisch aktiven Polyolefinen durch Polymerisation von Olefinen der Formel $CH_2{=}CHR$ mit R = Alkyl $C_1$–$C_{10}$, in Lösungsmitteln, flüssigen Monomeren oder der Gasphase bei Temperaturen zwischen –80 und 100 °C mittels einer löslichen Übergangsmetallverbindung und Aluminoxan, dadurch gekennzeichnet, daß die Polymerisation in Gegenwart eines optisch aktiven Katalysatorsystems durchgeführt wird, das aus folgenden Komponenten besteht

a) einer optisch aktiven Übergangsmetallverbindung, die nur ein Enantiomeres (R- oder S-Form) einer stereorigiden, chiralen Übergangsmetallverbindung enthält der allgemeinen Formel

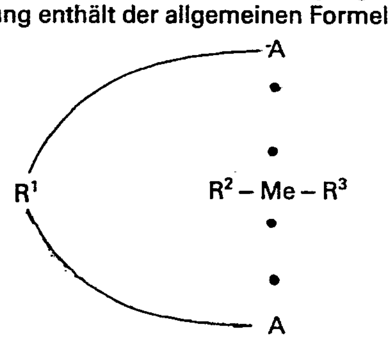

wobei $R^1$ = ein $C_1$ bis $C_4$ Kohlenwasserstoffrest, Me ein Übergangsmetall der 4. bis 6. Nebengruppe und A ein ein- oder mehrkerniger, unsymmetrischer Kohlenwasserstoffrest ist, und

$R^2$, $R^3$ = Halogen oder ein $C_1$ bis $C_6$ Alkylrest, wobei $R^2$ und $R^3$ gleich oder unterschiedlich sein können, sind, und

b) einer Aluminium enthaltenden Verbindung des Aluminoxantyps der allgemeinen Formeln

$$Al_2OR^5_4(Al(R^5)\text{-}O)_n$$

für ein lineares Aluminoxan und

$$(Al(R^5)\text{-}O)_{n+2}$$

für cyclisches Aluminoxan,

in denen n eine Zahl von 4 bis 20 und $R^5$ ein Methyl- oder Ethylrest sind.

2. Verfahren nach Anspruch 1, dadurch gekennzeichnet, daß als Übergangsmetallverbindung eine optisch aktive Titan- oder Zirkoniumverbindung verwendet wird.

3. Verfahren nach Anspruch 1, dadurch gekennzeichnet, daß die unsymmetrischen Kohlenwasserstoffreste A Indenyl- oder substituierte Cyclopentadienyl-Reste sind.

4. Verfahren nach Anspruch 1, dadurch gekennzeichnet, daß die Polymerisation in Gegenwart eines Katalysators, bestehend aus S- oder R-Ethylen-bis(4,5,6,7-tetrahydro-1-indenyl)-zirkonium-dichlorid und Methylaluminoxan durchgeführt wird.

**Claims**

1. A process for the preparation of optically active polyolefins by polymerizing olefins of the formula $CH_2{=}CHR$ in which R = $C_1$–$C_{10}$-alkyl in solvents, liquid monomers or the gas phase at temperatures between –80 and 100 ° C by means of a soluble transition metal compound and an aluminoxane, which comprises carrying out the polymerization in the presence of an optically active catalyst system composed of the following components

a) an optically active transition metal compound containing only one enantiomer (R- or S-form) of a stereorigid, chiral transition metal compound of the formula

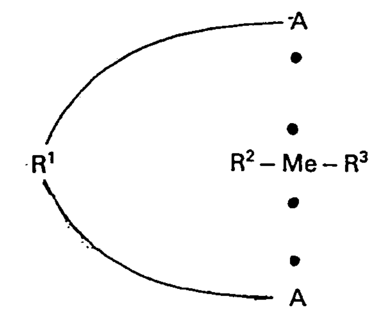

in which $R^1$ is a $C_1$ to $C_4$ hydrocarbon radical, Me is a transition metal of the 4th to 6th sub-group and A is a mononuclear or polynuclear, unsymmetrical hydrocarbon radical and

$R^2$ and $R^3$ are halogen or a $C_1$ to $C_6$ alkyl radical, it being possible for $R^2$ and $R^3$ to be identical or different, and

b) an aluminium-containing compound of the aluminoxane type of the formulae

$$Al_2OR^5_4(Al(R^5)\text{-}O)_n$$

for a linear aluminoxane and

$$(Al(R^5)\text{-}O)_{n+2}$$

for a cyclic aluminoxane, in which n is a number from 4 to 20 and $R^5$ is a methyl or ethyl radical.

2. The process as claimed in claim 1, wherein the transition metal compound used is an optically active titanium or zirconium compound.

3. The process as claimed in claim 1, wherein the unsymmetrical hydrocarbon radicals A are indenyl or substituted cyclopentadienyl radicals.

4. The process as claimed in claim 1, wherein the polymerization is carried out in the presence of a catalyst composed of S-ethylene-bis-(4,5,6,7-tetrahydro-1-indenyl)-zirconium dichloride or R-ethylene-bis-(4,5,6,7-tetra-hydro-1-indenyl)-zirconium dichloride and methyl aluminoxane.

## Revendications

1. Procédé de préparation de polyoléfines optiquement actives, par polymérisation d'oléfines de formule $CH_2=CHR$, dans laquelle R représente un groupe alkyle en $C_1$ à $C_{10}$, dans des solvants, des monomères liquides ou en phase gazeuse à des températures comprises entre −80 et +100 °C à l'aide d'un composé soluble de métal de transition et d'aluminoxane, procédé caractérisé en ce qu'on conduit la polymérisation en présence d'un système de catalyseur optiquement actif, consistant en les constituants suivants:

a) un composé optiquement actif du métal de transition, qui ne contient qu'un énantiomère (forme R ou forme S) d'un composé stéréorigide et chiral du métal de transition, de formule générale:

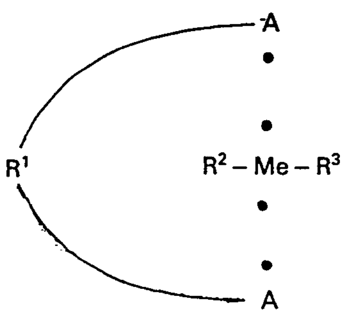

dans laquelle $R^1$ représente un reste d'hydrocarbures en $C_1$ à $C_4$, Me représente un métal de transition du sous-groupe 4 à 6 et A représente un reste d'hydrocarbures asymétriques comportant un ou plusieurs noyaux, et

$R^2$ et $R^3$ représentent chacun un atome d'halogène ou un reste alkyle en $C_1$ à $C_6$, $R^2$ et $R^3$ pouvant être identiques ou différents, et

b) un composé de type aluminoxane, contenant de l'aluminium et répondant aux formules générales:

$$Al_2OR^5_4(Al(R^5)\text{-}O)_n$$

pour un aluminoxane linéaire, et

$$(Al(R^5)\text{-}O)_{n+2}$$

pour un aluminoxane cyclique, formules dans lesquelles n est un nombre valant 4 à 20 et $R^5$ représente un reste méthyle ou éthyle.

2. Procédé selon la revendication 1, caractérisé en ce qu'on utilise comme composé de métal de transition un composé optiquement actif de titane ou de zirconium.

3. Procédé selon la revendication 1, caractérisé en ce que les restes A d'hydrocarbures asymétriques sont des restes indényle ou cyclopentadiényle substitués.

4. Procédé selon la revendication 1, caractérisé en ce qu'on conduit la polymérisation en présence d'un catalyseur consistant en du dichlorure, de S- ou de R-éthylène-bis(tétrahydro-4,5,6,7-indényl-1)-zirconium et de méthylaluminoxane.